# EUROPÄISCHE PATENTANMELDUNG

(11) **EP 4 810 287 A1**
(43) Veröffentlichungstag der Anmeldung: **23.09.2026**
(21) Anmeldenummer: 25164811.9
(22) Anmeldetag: 19.03.2025
(51) Int. Cl.: B60K 1/04

(54) **HECK- UND FRONTTRAKTIONSMODUL FÜR EINE ELEKTRISCH BETRIEBENE LANDWIRTSCHAFTLICHE ZUGMASCHINE**

(71) Anmelder: Deere & Company, Moline, IL 61265 (US)
(72) Erfinder: VON HOLST, CHRISTIAN, 68163 Mannheim (DE); PATEL, BIJAYKUMAR, 68163 Mannheim (DE); SCHACHT, THOMAS, 68163 Mannheim (DE)
(74) Vertreter: Dehnhardt, Florian Christopher

(57) **Zusammenfassung**

Die Erfindung betrifft ein Hecktraktionsmodul (10) für eine elektrisch betriebene landwirtschaftliche Zugmaschine (14), umfassend einen Heckmodulträger (18) mit daran angebrachten Hinterrädern (20), die mittels einer elektrischen Heckantriebseinrichtung (22) in Drehung versetzbar sind, einen aufladbaren Energiespeicher (26) zur Versorgung der elektrischen Heckantriebseinrichtung (22) mit elektrischer Energie, eine Kontrolleinheit (24) zur Steuerung der elektrischen Heckantriebseinrichtung (22), sowie eine Heckkupplungseinrichtung (48) zur Herstellung einer lösbaren elektrischen, mechanischen und/oder fluidischen Verbindung mit einem zugehörige Vorderräder (30) aufweisenden Fronttraktionsmodul (12).

## Beschreibung

Die zunehmende Elektrifizierung auch im Landmaschinenbereich führt zu entsprechenden Herausforderungen hinsichtlich des Lademanagements der meist aus einem aufladbaren Energiespeicher mit elektrischer Energie gespeisten elektrischen Antriebssysteme. So können die Ladepausen derartiger elektrischer Energiespeicher zu Arbeitsunterbrechungen von bis zu mehreren Stunden führen. Um einen unterbrechungsfreien Betrieb beispielsweise einer vollelektrischen landwirtschaftlichen Zugmaschine beim Bearbeiten eines Felds mittels eines daran angebrachten Bodenbearbeitungsgeräts zu gewährleisten, ist daher üblicherweise eine "geladene" Austauschmaschine vor Ort bereitzuhalten. Für viele Landwirtschaftsbetriebe ist eine derartige Vorgehensweise aus wirtschaftlichen Gründen unattraktiv. Auch sind alternative Ansätze, die auf einem Austausch lediglich des elektrischen Energiespeichers beruhen, aufgrund der darin verbauten empfindlichen Akkumulatoren gerade unter rauen Umgebungsbedingungen logistisch nur mit erheblichem Aufwand umsetzbar.

Angesichts dessen ist es Aufgabe, eine hinsichtlich ihres Lademanagements verbesserte elektrisch betriebene landwirtschaftliche Zugmaschine anzugeben.

Diese Aufgabe wird durch ein Heck- bzw. Fronttraktionsmodul für eine elektrisch betriebene landwirtschaftliche Zugmaschine mit den Merkmalen des Patentanspruchs 1 bzw. 7 sowie durch eine aus diesen Modulen bestehende landwirtschaftliche Zugmaschine mit den Merkmalen des Patentanspruchs 11 gelöst.

Das erfindungsgemäße Hecktraktionsmodul für eine elektrisch betriebene landwirtschaftliche Zugmaschine umfasst einen Heckmodulträger mit daran angebrachten Hinterrädern, die mittels einer elektrischen Heckantriebseinrichtung in Drehung versetzbar sind, einen aufladbaren Energiespeicher zur Versorgung der elektrischen Heckantriebseinrichtung mit elektrischer Energie, eine Kontrolleinheit zur Steuerung der elektrischen Heckantriebseinrichtung, sowie eine Heckkupplungseinrichtung zur Herstellung einer lösbaren elektrischen, mechanischen und/oder fluidischen (d.h. hydraulischen bzw. pneumatischen) Verbindung mit einem zugehörige Vorderräder aufweisenden Fronttraktionsmodul.

Durch Aufteilung der landwirtschaftlichen Zugmaschine in ein elektrisch betriebenes Hecktraktionsmodul einerseits sowie ein daran anbringbares Fronttraktionsmodul andererseits ist es möglich, das Hecktraktionsmodul zum Nachladen des elektrischen Energiespeichers separat abzunehmen sowie durch ein baugleiches Hecktraktionsmodul mit (voll) geladenem elektrischen Energiespeicher zu ersetzen. Insofern ist ein Austausch der gesamtem landwirtschaftlichen Zugmaschine nicht erforderlich. Diese Möglichkeit bietet sich gerade im Bereich vollelektrischer Klein- und Kleinsttraktoren an, da hier das Gewicht der einzelnen Traktionsmodule im Hinblick auf eine unkomplizierte Handhabung beim An- und Abkuppeln während des Austauschvorgangs vergleichsweise gering ist.

Das Hecktraktionsmodul kann hierbei mit für landwirtschaftliche Zugmaschinen bzw. landwirtschaftliche Traktoren typischen Zusatz- bzw. Arbeitsaggregaten ausgestattet sein. Hierzu gehört beispielsweise ein hydraulisch betätigbarer Dreipunkt-Kraftheber zur Anbringung eines Anbau- oder Zusatzgeräts, eine elektrisch angetriebene Heckzapfwelle, selektive Steuerventile (SCVs) zum Betreiben daran anschließbarer hydraulischer Arbeitsfunktionen, Pneumatikanschlüsse zur Betätigung einer Druckbremsanlage eines gezogenen Anhängers, oder auch eine genormte ISOBUS- bzw. AEF-Schnittstelle. Die zur Bereitstellung des erforderlichen Hydraulik- bzw. Pneumatikdrucks benötigten Systeme können Bestandteil des Hecktraktionsmoduls sein. Andererseits ist es auch denkbar, die betreffenden Baugruppen dem Fronttraktionsmodul zuzuordnen, sowie die insoweit notwendigen elektrischen, hydraulischen und pneumatischen Verbindungen zum Hecktraktionsmodul über die Hecckupplungseinrichtung herzustellen. Das bei Ladebedarf auszutauschende und zu diesem Zweck mehrfach vorzuhaltende Hecktraktionsmodul lässt sich auf diese Weise baulich maßgeblich vereinfachen, was zu einem entsprechenden Kostenvorteil führt.

Typischerweise umfasst das Hecktraktionsmodul einen offenen oder von einer Fahrerkabine umgebenen Bedienstand mit diversen mit der Kontrolleinheit kommunizierenden Fahrbedienelementen zur Steuerung der landwirtschaftlichen Zugmaschine, insbesondere der elektrischen Heckantriebseinrichtung, einer dem Fronttraktionsmodul zugeordneten Radlenkung, sowie einer Betriebsbremsanlage, die den Vorder- und Hinterrädern zugeordnete Radbremseinrichtungen aufweist. Die betreffenden Fahrbedienelemente sind als Lenkhandhabe bzw. Lenkrad, Fahrbedienhebel und/oder Fahr- bzw. Bremspedale ausgebildet. Daneben können Bedienelemente zur Steuerung von Arbeits- und Betriebsfunktionen der landwirtschaftlichen Zugmaschine vorgesehen sein.

Auch besteht die Möglichkeit, dass an dem Heckmodulträger wenigstens ein Hilfsrad angebracht ist, das sich zwischen einer angehobenen Transportposition und einer der Abstützung gegenüber dem Untergrund dienenden Betriebsposition verstellen lässt. Das wenigstens eine Hilfsrad stabilisiert den Heckmodulträger vorzugsweise im Bereich seines freien Endes, sodass ein An- und Abkuppeln vom Fronttraktionsmodul wie auch ein anschließender Transport zum Ort einer Ladestation erleichtert wird. In der angehobenen Transportposition kann das wenigstens eine Hilfsrad von einer am Heckmodulträger ausgebildeten Radkammer schützend aufgenommen sein.

Um ein An- und Abkuppeln des Hecktraktionsmoduls vom Fronttraktionsmodul vom Boden aus möglich zu machen, kann die elektrische Heckantriebseinrichtung fernsteuerbar ausgebildet sein, wozu sich die Kontrolleinheit über eine Drahtlosschnittstelle (Wifi, Bluetooth) mit einem mobilen Endgerät verbinden lässt, auf dem eine entsprechende Fernsteuer-App installiert ist.

Zusätzlich besteht die Möglichkeit, dass mechanische Führungsmittel vorhanden sind, die eine korrekte gegenseitige Positionierung von Heck- und Fronttraktionsmodul beim Ankuppeln vereinfachen. Die Führungsmittel können einen am Hecktraktionsmodul vorgesehenen Führungskonus zur Ineingriffnahme und Zentrierung eines am Fronttraktionsmodul angeordneten Führungsvorsprungs aufweisen.

In der Regel umfasst der aufladbare Energiespeicher einen elektrischen Akkumulator, beispielsweise einen im Fahrzeugbereich gängigen und damit dementsprechend erprobten Lithiumionenakkumulator, Lithium-Eisenphosphat-Akkumulator oder eine Feststoffbatterie.

Ferner kann an dem Heckmodulträger ein mit einem Lademanagementsystem des elektrischen Energiespeichers kommunizierender Steckverbinder zur Herstellung einer lösbaren Ladeverbindung mit einer Ladestation angeordnet sein. Das Lademanagementsystem dient unter anderem der Überwachung des Ladevorgangs und kann verschiedene, sich hinsichtlich der Ladezeiten unterscheidende Ladeprogramme aufweisen. Der Steckverbinder ist bevorzugt vom IEC Typ 2, was eine Nutzung auch öffentlicher Ladestationen erlaubt.

Des Weiteren ist ein erfindungsgemäßes Fronttraktionsmodul vorgesehen, das zur Anbringung an einem erfindungsgemäßen Hecktraktionsmodul der vorstehend beschriebenen Art ausgebildet ist. Das erfindungsgemäße Fronttraktionsmodul umfasst einen Frontmodulträger mit daran angebrachten Vorderrädern, die mittels einer elektrischen Frontantriebseinrichtung in Drehung versetzbar sind, einen aufladbaren Energiespeicher zur Versorgung der elektrischen Frontantriebseinrichtung mit elektrischer Energie, eine Kontrolleinheit zur Steuerung der elektrischen Frontantriebseinrichtung, sowie eine Frontkupplungseinrichtung zur Herstellung einer lösbaren elektrischen, mechanischen und/oder fluidischen Verbindung mit einem elektrisch antreibbare Hinterräder aufweisenden Hecktraktionsmodul oder einem zum Alleinbetrieb des Fronttraktionsmoduls vorgesehenen Fahrbedienmodul.

Das Fronttraktionsmodul ist somit (ebenfalls) elektrisch antreibbar und weist zu diesem Zweck einen eigenen elektrischen Energiespeicher auf. Grundsätzlich ist es denkbar, den elektrischen Energiespeicher zur Pufferung des im Hecktraktionsmodul enthaltenen elektrischen Energiespeichers (und umgekehrt) heranzuziehen. Mittels des Lademanagementsystems lässt sich eine Anpassung bzw. Angleichung ladezustandsbedingt voneinander abweichender Spannungsniveaus vornehmen.

Der Vollständigkeit halber sei angemerkt, dass das Fronttraktionsmodul auch ohne eigene Antriebsmittel, d.h. "passiv" ausgebildet sein kann und lediglich als Träger eines zusätzlichen elektrischen Energiespeichers dient. Die Vorderräder dienen in einem solchen Fall allenfalls der Lenkung, sind ansonsten jedoch frei laufend.

Die Kombination aus Front- und Hecktraktionsmodul bildet somit eine allradgetriebene landwirtschaftliche Zugmaschine, die insbesondere die Gestalt eines landwirtschaftlichen Traktors aufweisen kann. Der mittels der elektrischen Front- und Heckantriebseinrichtung verwirklichte Fahrantrieb kann hierzu den Vorder- bzw. Hinterrädern zugeordnete elektrische Einzelradmotoren aufweisen, die sich seitens der beiden Kontrolleinheiten radindividuell ansteuern lassen.

Üblicherweise sind die Vorderräder des Fronttraktionsmoduls lenkbar ausgebildet, wozu eine Radlenkung mit elektrischen oder elektrohydraulischen Stellmitteln zur Beeinflussung eines an den Vorderädern einstellbaren Radlenkwinkels vorgesehen sein kann.

Optional erlaubt die Verwendung des Fronttraktionsmoduls in Verbindung mit dem Fahrbedienmodul den unabhängigen Betrieb des Fronttraktionsmoduls als Einachser, z.B. zur Verwendung mit einem über eine frontseitige Befestigungsschnittstelle anbringbaren Anbaugerät in Gestalt eines Frontmähbalkens, eines Schiebeschilds, eines Laubgebläses, einer Schneefräse, oder dergleichen. Hierzu ist das Fronttraktionsmodul entlang seiner Längsachse bezüglich seines Schwerpunkts baulich entsprechend ausbalanciert. Bei dem Fahrbedienmodul kann es sich um ein an der Frontkupplungseinrichtung anbringbares Handlenkgestänge handeln, das neben linken und rechten Handgriffen eine Vielzahl von Bedienelementen zur Steuerung eines durch die elektrische Frontantriebseinrichtung verwirklichten Fahrantriebs einschließlich einer aktiven Lenkung aufweist, wobei letztere auf einer asymmetrischen Veränderung der Raddrehzahlverhältnisse an den Vorderrädern bis hin zu einer Inversion ihrer Rotationsrichtungen beruht. Dies erlaubt die Durchführung von Lenk- und Wendemanövern auf kleinstem Raum.

Ferner kann an dem Frontmodulträger wenigstens ein Hilfsrad angebracht sein, das sich zwischen einer angehobenen Transportposition und einer der Abstützung gegenüber dem Untergrund dienenden Betriebsposition verstellen lässt. Das wenigstens eine Hilfsrad stabilisiert den Frontmodulträger bevorzugt im Bereich seines freien Endes, sodass ein An- und Abkuppeln vom Hecktraktionsmodul wie auch ein anschließender Transport zum Ort einer Ladestation erleichtert wird. In der angehobenen Transportposition kann das wenigstens eine Hilfsrad von einer am Frontmodulträger ausgebildeten Radkammer schützend aufgenommen sein.

Der aufladbare Energiespeicher kann auch hier einen als Lithiumionenakkumulator, Lithium-Eisenphosphat-Akkumulator oder Feststoffbatterie ausgebildeten elektrischen Akkumulator umfassen, wobei an dem Frontmodulträger ein mit einem Lademanagementsystem des Energiespeichers kommunizierender Steckverbinder zur Herstellung einer lösbaren Ladeverbindung mit einer Ladestation angeordnet sein kann. Zur Vermeidung unnötiger Wiederholungen sei in diesem Zusammenhang ergänzend auf die vorstehende Beschreibung der korrespondierenden Komponenten am Hecktraktionsmodul verwiesen.

Ist eine Verwendung des Fronttraktionsmoduls in Verbindung mit dem Hecktraktionsmodul zur Bildung einer landwirtschaftlichen Zugmaschine beabsichtigt, so können auch am Fronttraktionsmodul ein hydraulisch betätigbarer Dreipunkt-Kraftheber zur Anbringung eines Anbau- oder Zusatzgeräts wie auch eine elektrisch angetriebene Frontzapfwelle vorhanden sein.

Das erfindungsgemäße Heck- bzw. Fronttraktionsmodul für eine elektrisch betriebene landwirtschaftliche Zugmaschine wird im Folgenden anhand der beigefügten Zeichnungen näher erläutert. Dabei sind hinsichtlich ihrer Funktion übereinstimmende bzw. vergleichbare Komponenten bzw. Baugruppen mit denselben Bezugszeichen gekennzeichnet. Es zeigen:
- Fig. 1: ein schematisch dargestelltes Ausführungsbeispiel einer aus einem erfindungsgemäßen Fronttraktionsmodul sowie einem erfindungsgemäßen Hecktraktionsmodul bestehenden landwirtschaftlichen Zugmaschine,
- Fig. 2: eine Ansicht des in Fig. 1 wiedergegebenen erfindungsgemäßen Hecktraktionsmoduls in abgekuppeltem Zustand,
- Fig. 3: eine Ansicht des in Fig. 1 wiedergegebenen erfindungsgemäßen Fronttraktionsmoduls in abgekuppeltem Zustand, und
- Fig. 4: eine Ansicht des in Fig. 3 dargestellten erfindungsgemäßen Fronttraktionsmoduls mit einem daran angebrachten Fahrbedienmodul.

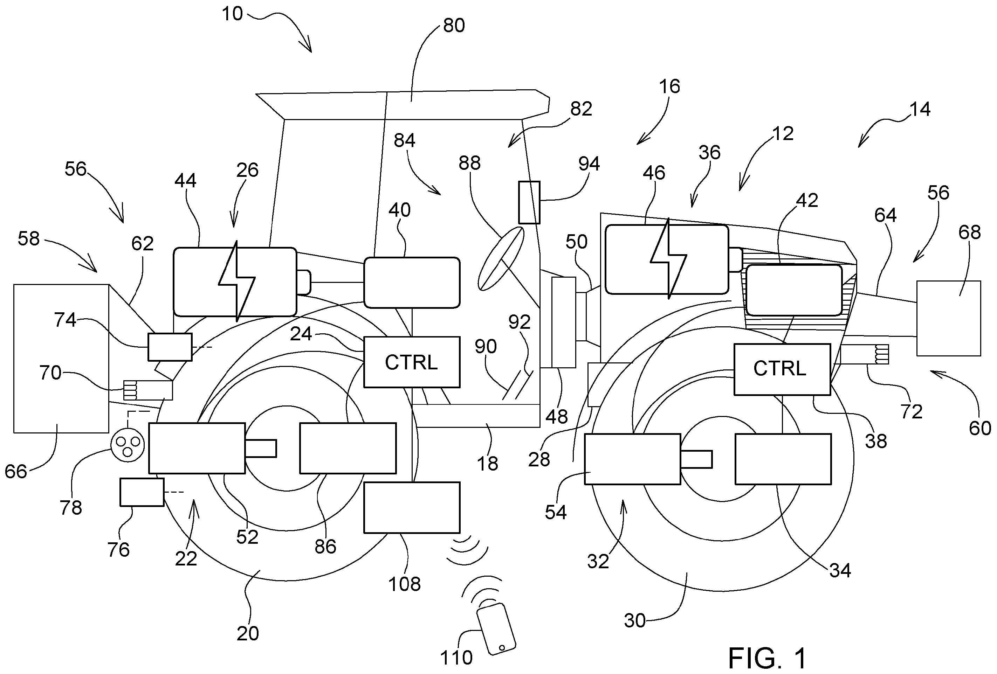

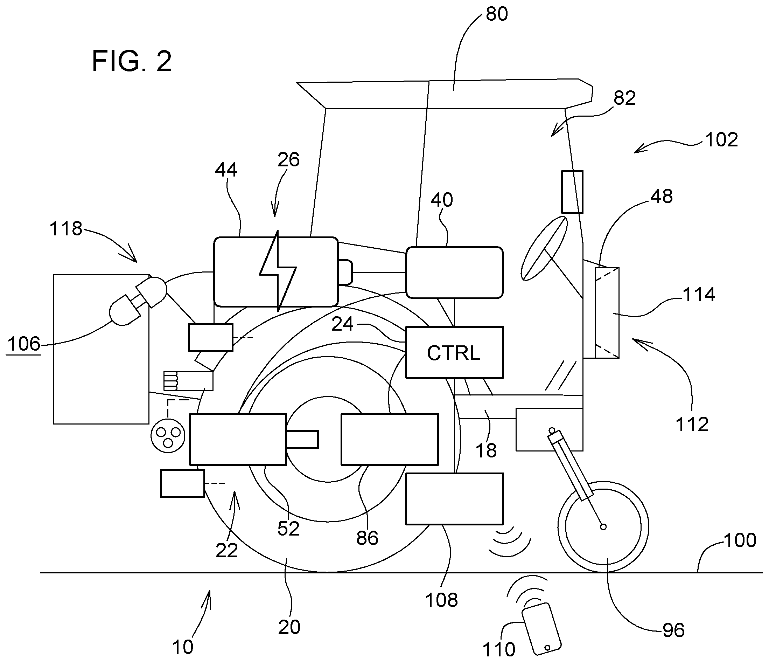

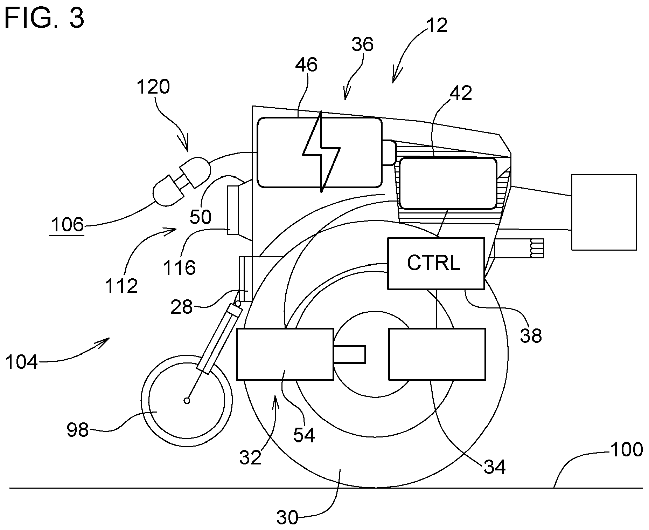

Fig. 1 zeigt ein Ausführungsbeispiel einer aus einem erfindungsgemäßen Hecktraktionsmodul 10 sowie einem erfindungsgemäßen Fronttraktionsmodul 12 bestehenden landwirtschaftlichen Zugmaschine 14 in Gestalt eines landwirtschaftlichen Traktors 16. Die landwirtschaftliche Zugmaschine 14 soll nachfolgend unter gleichzeitiger Bezugnahme auf die beiden Einzelansichten des Heck- bzw. Fronttraktionsmoduls 10, 12 in Fig. 2 bzw. 3 erläutert werden.

Demgemäß umfasst das Hecktraktionsmodul 10 einen Heckmodulträger 18 mit daran angebrachten Hinterrädern 20, die mittels einer elektrischen Heckantriebseinrichtung 22 in Drehung versetzbar sind. Die mittels einer Kontrolleinheit 24 steuerbare elektrische Heckantriebseinrichtung 22 wird aus einem aufladbaren Energiespeicher 26 mit elektrischer Energie versorgt.

In entsprechender Weise umfasst das Fronttraktionsmodul 12 einen Frontmodulträger 28 mit daran angebrachten Vorderrädern 30, die ihrerseits mittels einer elektrischen Frontantriebseinrichtung 32 in Drehung versetzbar sind. Die Vorderräder 30 des Fronttraktionsmoduls 12 sind lenkbar ausgebildet, wozu eine Radlenkung 34 mit elektrischen oder elektrohydraulischen Stellmitteln zur Beeinflussung eines an den Vorderädern 30 einstellbaren Radlenkwinkels vorgesehen ist. Ein weiterer aufladbarer Energiespeicher 36 dient der Versorgung der mittels einer weiteren Kontrolleinheit 38 steuerbaren elektrischen Frontantriebseinrichtung 32 mit elektrischer Energie.

Mit anderen Worten ist das Fronttraktionsmodul 12 ebenfalls elektrisch antreibbar und weist zu diesem Zweck einen eigenen elektrischen Energiespeicher 36 auf. Dieser wird zugleich zur Pufferung des im Hecktraktionsmodul 10 enthaltenen elektrischen Energiespeichers 26 (und umgekehrt) herangezogen. Mittels eines dem Heck- bzw. Fronttraktionsmodul 10, 12 jeweils zugeordneten Lademanagementsystems 40, 42 wird eine Anpassung bzw. Angleichung ladezustandsbedingt voneinander abweichender Spannungsniveaus vorgenommen.

Bei dem aufladbaren Energiespeicher 26, 36 handelt es sich jeweils um einen elektrischen Akkumulator 44, 46, beispielsweise einen im Fahrzeugbereich gängigen und damit dementsprechend erprobten Lithiumionenakkumulator, Lithium-Eisenphosphat-Akkumulator oder eine Feststoffbatterie.

Zur Herstellung einer lösbaren elektrischen, mechanischen und/oder fluidischen (d.h. hydraulischen bzw. pneumatischen) Verbindung zwischen dem Heck- und Fronttraktionsmodul 10, 12 ist an dem Heckmodulträger 18 eine Heckkupplungseinrichtung 48 sowie an dem Frontmodulträger 28 eine damit komplementär ausgebildete Frontkupplungseinrichtung 50 angebracht.

Die in Fig. 1 wiedergegebene Kombination aus Heck- und Fronttraktionsmodul 10, 12 bildet somit eine allradgetriebene landwirtschaftliche Zugmaschine 14. Der mittels der elektrischen Heck- und Frontantriebseinrichtung 22, 32 verwirklichte Fahrantrieb weist hierzu den Hinter- bzw. Vorderrädern 20, 30 zugeordnete elektrische Einzelradmotoren 52, 54 auf, die sich radindividuell ansteuern lassen. Hierbei erfolgt die Koordination des Fahrantriebs bzw. der Einzelradmotoren 52, 54 mittels der über die Heck- bzw. Frontkupplungseinrichtung 48, 50 miteinander kommunizierenden Kontrolleinheiten 24, 38.

Ausgehend von Fig. 2 bzw. 3 ist das Heck- bzw. Fronttraktionsmodul 10, 12 mit für landwirtschaftliche Zugmaschinen typischen Zusatz- bzw. Arbeitsaggregaten 56 ausgestattet. Zu diesen gehört ein im Heck- bzw. Frontbereich 58, 60 angeordneter hydraulisch betätigbarer Dreipunkt-Kraftheber 62, 64 zur Anbringung eines Anbau- oder Zusatzgeräts 66, 68, eine elektrisch angetriebene Heck- bzw. Frontzapfwelle 70, 72, selektive Steuerventile (SCVs) 74 zum Betreiben daran anschließbarer hydraulischer Arbeitsfunktionen, Pneumatikanschlüsse 76 zur Betätigung einer Druckbremsanlage eines gezogenen Anhängers, und/oder eine genormte ISOBUS- bzw. AEF-Schnittstelle 78. Die zur Bereitstellung des erforderlichen Hydraulik- bzw. Pneumatikdrucks benötigten Systeme sind Bestandteil des Hecktraktionsmoduls 10. Andererseits ist es auch möglich, die betreffenden Baugruppen dem Fronttraktionsmodul 12 zuzuordnen, sowie die insoweit notwendigen elektrischen, hydraulischen und pneumatischen Verbindungen zum Hecktraktionsmodul 10 über die Heck- bzw. Frontkupplungseinrichtung 48, 50 herzustellen.

Des Weiteren umfasst das Hecktraktionsmodul 10 einen von einer Fahrerkabine 80 umgebenen Bedienstand 82 mit diversen mit der zugehörigen Kontrolleinheit 24 kommunizierenden Fahrbedienelementen 84 zur Steuerung der landwirtschaftlichen Zugmaschine 14, unter anderem der elektrischen Heck- und Frontantriebseinrichtung 22, 32 bzw. der elektrischen Einzelradmotoren 52, 54, der dem Fronttraktionsmodul 12 zugeordneten Radlenkung 34, sowie einer Betriebsbremsanlage 86, die den Hinter- und Vorderrädern 20, 30 zugeordnete Radbremseinrichtungen aufweist. Die betreffenden Fahrbedienelemente 88 sind als Lenkhandhabe in Gestalt eines Lenkrads 88 und/oder als Fahr- bzw. Bremspedale 90, 92 ausgebildet. Daneben sind in einer Nutzerschnittstelle 94 zusammengefasste Bedienelemente zur Steuerung von Arbeits- und Betriebsfunktionen, die unter anderem mittels der vorgenannten Zusatz- bzw. Arbeitsaggregate 56 am Heck- bzw. Fronttraktionsmodul 10, 12 ausführbar sind, vorgesehen.

Wie in den jeweiligen Einzeldarstellungen entsprechend Fig. 2 bzw. 3 zu erkennen ist, ist an dem Heck- bzw. Frontmodulträger 18, 28 wenigstens ein Hilfsrad 96, 98 angebracht, das sich zwischen einer angehobenen Transportposition und einer der Abstützung gegenüber dem Untergrund 100 dienenden Betriebsposition verstellen lässt. Das wenigstens eine Hilfsrad 96, 98 stabilisiert den Heck- bzw. Frontmodulträger 18, 28 im Bereich seines freien Endes 102, 104, sodass ein An- und Abkuppeln des Hecktraktionsmoduls 10 vom Fronttraktionsmodul 12 (und umgekehrt) wie auch ein anschließender Transport zum Ort einer Ladestation 106 erleichtert wird. In der angehobenen Transportposition ist das wenigstens eine Hilfsrad 96, 98 von einer am Heck- bzw. Frontmodulträger 18, 28 ausgebildeten Radkammer schützend aufgenommen (nicht gezeigt).

Um ein An- und Abkuppeln des Hecktraktionsmoduls 10 vom Fronttraktionsmodul 12 (und umgekehrt) vom Boden aus möglich zu machen, ist zumindest die elektrische Heckantriebseinrichtung 22 fernsteuerbar ausgebildet, wozu sich die zugehörige Kontrolleinheit 24 über eine Drahtlosschnittstelle 108 (Wifi, Bluetooth) mit einem mobilen Endgerät 110 verbinden lässt, auf dem eine entsprechende Fernsteuer-App installiert ist.

Zusätzlich sind mechanische Führungsmittel 112 im Bereich der Heck- bzw. Frontkupplungseinrichtung 48, 50 vorhanden, die eine korrekte gegenseitige Positionierung von Heck- und Fronttraktionsmodul 10, 12 beim Ankuppeln vereinfachen. Die Führungsmittel 112 weisen vorliegend einen am Hecktraktionsmodul 10 vorgesehenen Führungskonus 114 zur Ineingriffnahme und Zentrierung eines am Fronttraktionsmodul 12 angeordneten Führungsvorsprungs 116 auf.

An dem Heck- bzw. Frontmodulträger 18, 28 ist ein mit dem Lademanagementsystem 40, 42 des jeweiligen elektrischen Energiespeichers 26, 36 kommunizierender Steckverbinder 118, 120 zur Herstellung einer lösbaren Ladeverbindung mit der Ladestation 106 angeordnet. Das Lademanagementsystem 40, 42 dient hier der Überwachung des Ladevorgangs und weist verschiedene, sich hinsichtlich der Ladezeiten unterscheidende Ladeprogramme auf. Der Steckverbinder 118, 120 ist bevorzugt vom IEC Typ 2, was eine Nutzung auch öffentlicher Ladestationen erlaubt.

Durch Aufteilung der landwirtschaftlichen Zugmaschine 14 in ein elektrisch betriebenes Hecktraktionsmodul 10 einerseits sowie ein daran anbringbares Fronttraktionsmodul 12 andererseits ist es möglich, das Hecktraktionsmodul 10 zum Nachladen des elektrischen Energiespeichers 26 separat abzunehmen sowie durch ein baugleiches Hecktraktionsmodul 10 mit (voll) geladenem elektrischen Energiespeicher 26 zu ersetzen. Diese Möglichkeit bietet sich gerade im Bereich vollelektrischer Klein- und Kleinsttraktoren an, da hier das Gewicht der einzelnen Traktionsmodule 10, 12 im Hinblick auf eine unkomplizierte Handhabung beim An- und Abkuppeln während des Austauschvorgangs vergleichsweise gering ist.

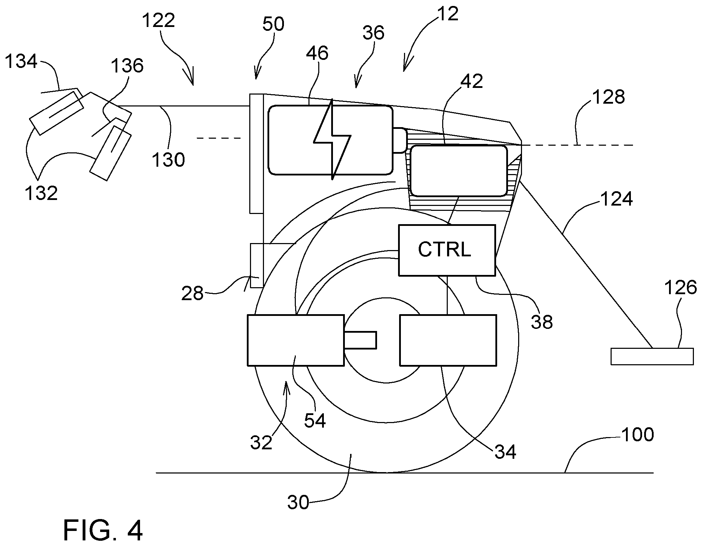

Fig. 4 zeigt eine Ansicht des Fronttraktionsmoduls 12 mit einem daran angebrachten, zum Alleinbetrieb des Fronttraktionsmoduls 12 vorgesehenen Fahrbedienmodul 122. Die Verwendung des Fronttraktionsmoduls 12 in Verbindung mit dem Fahrbedienmodul 122 erlaubt den unabhängigen Betrieb des Fronttraktionsmoduls 12 als Einachser, z.B. zur Verwendung mit einem über eine frontseitige Befestigungsschnittstelle 124 anbringbaren Anbaugerät 126 in Gestalt eines Frontmähbalkens, eines Schiebeschilds, eines Laubgebläses, einer Schneefräse, oder dergleichen. Hierzu ist das Fronttraktionsmodul 12 entlang seiner Längsachse 128 bezüglich seines Schwerpunkts baulich entsprechend ausbalanciert.

Bei dem Fahrbedienmodul 122 handelt es sich um ein an der Frontkupplungseinrichtung 50 anbringbares Handlenkgestänge 130, das neben linken und rechten Handgriffen 132 eine Vielzahl von Bedienelementen 134, 136 zur Steuerung des durch die elektrische Frontantriebseinrichtung 32 verwirklichten Fahrantriebs einschließlich einer aktiven Lenkung aufweist, wobei letztere auf einer asymmetrischen Veränderung der Raddrehzahlverhältnisse an den Vorderrädern 30 bis hin zu einer Inversion ihrer Rotationsrichtungen beruht. Dies erlaubt die Durchführung von Lenk- und Wendemanövern auf kleinstem Raum.

## Patentansprüche

1. Hecktraktionsmodul für eine elektrisch betriebene landwirtschaftliche Zugmaschine, umfassend einen Heckmodulträger (18) mit daran angebrachten Hinterrädern (20), die mittels einer elektrischen Heckantriebseinrichtung (22) in Drehung versetzbar sind, einen aufladbaren Energiespeicher (26) zur Versorgung der elektrischen Heckantriebseinrichtung (22) mit elektrischer Energie, eine Kontrolleinheit (24) zur Steuerung der elektrischen Heckantriebseinrichtung (22), sowie eine Heckkupplungseinrichtung (48) zur Herstellung einer lösbaren elektrischen, mechanischen und/oder fluidischen Verbindung mit einem zugehörige Vorderräder (30) aufweisenden Fronttraktionsmodul (12).

2. Hecktraktionsmodul nach Anspruch 1, **dadurch gekennzeichnet, dass** an dem Heckmodulträger (18) wenigstens ein Hilfsrad (96) angebracht ist, das sich zwischen einer angehobenen Transportposition und einer der Abstützung gegenüber dem Untergrund (100) dienenden Betriebsposition verstellen lässt.

3. Hecktraktionsmodul nach Anspruch 1 oder 2, **dadurch gekennzeichnet, dass** die elektrische Heckantriebseinrichtung (22) fernsteuerbar ausgebildet ist.

4. Hecktraktionsmodul nach wenigstens einem der Ansprüche 1 bis 3, **dadurch gekennzeichnet, dass** mechanische Führungsmittel (112) zur gegenseitigen Positionierung von Heck- und Fronttraktionsmodul (10, 12) vorhanden sind.

5. Hecktraktionsmodul nach wenigstens einem der Ansprüche 1 bis 4, **dadurch gekennzeichnet, dass** der aufladbare Energiespeicher (26) einen elektrischen Akkumulator (44) umfasst.

6. Hecktraktionsmodul nach wenigstens einem der Ansprüche 1 bis 5, **dadurch gekennzeichnet, dass** an dem Heckmodulträger (18) ein mit einem Lademanagementsystem (40) des elektrischen Energiespeichers (26) kommunizierender Steckverbinder (118) zur Herstellung einer lösbaren Ladeverbindung mit einer Ladestation (106) angeordnet ist.

7. Fronttraktionsmodul insbesondere zur Anbringung an einem Hecktraktionsmodul nach wenigstens einem der Ansprüche 1 bis 6, umfassend einen Frontmodulträger (28) mit daran angebrachten Vorderrädern (30), die mittels einer elektrischen Frontantriebseinrichtung (32) in Drehung versetzbar sind, einen aufladbaren Energiespeicher (36) zur Versorgung der elektrischen Frontantriebseinrichtung (32) mit elektrischer Energie, eine Kontrolleinheit (38) zur Steuerung der elektrischen Frontantriebseinrichtung (32), sowie eine Frontkupplungseinrichtung (50) zur Herstellung einer lösbaren elektrischen, mechanischen und/oder fluidischen Verbindung mit einem elektrisch antreibbare Hinterräder (20) aufweisenden Hecktraktionsmodul (10) oder einem zum Alleinbetrieb des Fronttraktionsmoduls (12) vorgesehenen Fahrbedienmodul (122).

8. Fronttraktionsmodul nach Anspruch 7, **dadurch gekennzeichnet, dass** die Vorderräder (30) des Fronttraktionsmoduls (12) lenkbar ausgebildet sind.

9. Fronttraktionsmodul nach Anspruch 7 oder 8, **dadurch gekennzeichnet, dass** an dem Frontmodulträger (28) wenigstens ein Hilfsrad (98) angebracht ist, das sich zwischen einer angehobenen Transportposition und einer der Abstützung gegenüber dem Untergrund (100) dienenden Betriebsposition verstellen lässt.

10. Fronttraktionsmodul nach wenigstens einem der Ansprüche 7 bis 9, **dadurch gekennzeichnet, dass** der aufladbare Energiespeicher (36) einen elektrischen Akkumulator (46) umfasst.

11. Fronttraktionsmodul nach wenigstens einem der Ansprüche 7 bis 10, **dadurch gekennzeichnet, dass** an dem Frontmodulträger (28) ein mit einem Lademanagementsystem (42) des Energiespeichers (36) kommunizierender Steckverbinder (120) zur Herstellung einer lösbaren Ladeverbindung mit einer Ladestation (106) angeordnet ist.

12. Landwirtschaftliche Zugmaschine, bestehend aus einer Kombination eines Hecktraktionsmoduls (10) nach wenigstens einem der Ansprüche 1 bis 6 und eines Fronttraktionsmodul (12) nach wenigstens einem der Ansprüche 7 bis 11.
